# EUROPEAN PATENT APPLICATION

(11) **EP 2 665 013 A1**
(43) Date of publication of application: **20.11.2013**
(21) Application number: 13167694.2
(22) Date of filing: 14.05.2013
(51) Int. Cl.: G06F 21/84

(54) **Common computing apparatus providing distinct non-certified and certified computing platforms**

(30) Priority: 14.05.2012 US 201213471119
(71) Applicant: ROSEMOUNT AEROSPACE INC., Burnsville, MN 55306-4898 (US)
(72) Inventor: Haukom, Michael James, Farmington, MN 55024 (US); Horsager, Thomas Jay, Inver Grove Heights, MN 55077 (US); Thompson, Jesse Kelly, Minneapolis, MN 55407 (US)
(74) Representative: Hall, Matthew Benjamin

(57) **Abstract**

An example apparatus (600) includes a non-certified computing platform (102; 302; 400; 602), a certified computing platform (102; 302; 400; 604) and a user interface (404). The non-certified computing platform (102; 302; 400; 602) includes first hardware (606) and is configured to host non-certified software. The certified computing platform (102; 302; 400; 604) is separate and distinct from the non-certified computing platform (102; 302; 400; 602), and it includes second hardware (616) and is configured to host certified software in a partitioned environment. The user interface (404) is coupled to both platforms and includes a display (416; 628) coupled to both the first hardware (606) and second hardware (616) via a controllable switch (630). According to this example, the non-certified computing platform (102; 302; 400; 602) and certified computing platform (102; 302; 400; 604) are configured to host the non-certified software and certified software such that both are capable of operating concurrently.

## Description

### TECHNICAL FIELD

Example embodiments of the present invention generally relate to computing platforms and, more particularly, relate to a common computing apparatus providing distinct non-certified and certified computing platforms.

### BACKGROUND

A number of industries rely on software at least some of which must be certified for use. In the aerospace industry, for example, aircraft may employ commercial-off-the-shelf software (COTS) software. But because of safety and reliability concerns, aircraft typically also employ software requiring certification by an appropriate authority such as the Federal Aviation Administration (FAA). This certification for a software application often requires verification and substantiation of not only the application but also the system on which it operates, which may include a number of hardware and/or software components. Any changes in the certified software or the system on which it operates may require re-verification and substantiation of the application and system. The certification requirements may therefore require significant investment in time and cost.

In an aircraft, software including non-certified and certified software may be deployed onto an electronic flight bag (EFB), but certified software typically requires a separate, dedicated EFB. And particularly in a federated avionics platform, other certified software may be deployed onto respective line replaceable units (LRUs) of which the aircraft may include a number of assembled and integrated LRUs. This type of deployment may at least somewhat isolate certified software from non-certified software and other components of the aircraft, but it also adds undesirable weight and cost to the aircraft.

### BRIEF SUMMARY

Example embodiments of the present invention relate to a common computing apparatus that provides distinct non-certified and certified computing platforms. The common computing apparatus of example embodiments may therefore be configured to host both non-certified and certified software such that respective software may operate concurrently. According to one example embodiment, an apparatus is provided that includes a non-certified computing platform, a certified computing platform and a user interface. In one example, the apparatus may be in the form of an electronic flight bag (EFB).

According to one example, the non-certified computing platform includes first hardware and configured to host non-certified software. The certified computing platform is separate and distinct from the non-certified computing platform, and it includes a second hardware that is configured to host certified software in a partitioned environment. The user interface is coupled to both platforms and includes a display coupled to both the first hardware and second hardware via a controllable switch. According to this example, the non-certified computing platform and certified computing platform are configured to host the non-certified software and certified software such that both are capable of operating concurrently.

Either or both of the first hardware or second hardware may be couplable to a complex system regulated by a regulatory authority having certification authority over the certified software and/or hardware. In this regard, the either or both of the first hardware or second hardware may be couplable to a data concentrator that is coupled to the complex system. In one example, the complex system is an aircraft, and the regulatory authority is the FAA.

In one example, the certified computing platform may be configured as an integrated modular avionics (IMA) platform. In this example, the non-certified computing platform may provide a COTS software operating environment.

### BRIEF DESCRIPTION OF THE DRAWINGS

Having thus described the invention in general terms, reference will now be made to the accompanying drawings, which are not necessarily drawn to scale, and wherein:
FIG. 1 is a block diagram of a system including a common computing apparatus and data concentrator coupled to a complex system, according to one example embodiment;
FIG. 2 is a perspective view of an example common computing apparatus in the form of an EFB, which may be installed in an aircraft cockpit for providing flight data to pilots, according to one example embodiment;
FIG. 3 is a block diagram of a system including a common computing apparatus and data concentrator coupled to an aircraft, according to a more particular example embodiment;
FIG. 4 is a block diagram of a suitable common computing apparatus, according to one example embodiment;
FIG. 5 is a block diagram of a suitable data concentrator, according to one example embodiment; and
FIG. 6 is a high-level system diagram of a partitioned common computing apparatus, according to one example embodiment.

### DETAILED DESCRIPTION

Example embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. For example, unless otherwise indicated, reference to something as being a first, second or the like should not be construed to imply a particular order. Reference may be made herein to terms specific to a particular system, architecture or the like, but it should be understood that example embodiments of the present invention may be equally applicable to other similar systems, architectures or the like. Like reference numerals refer to like elements throughout.

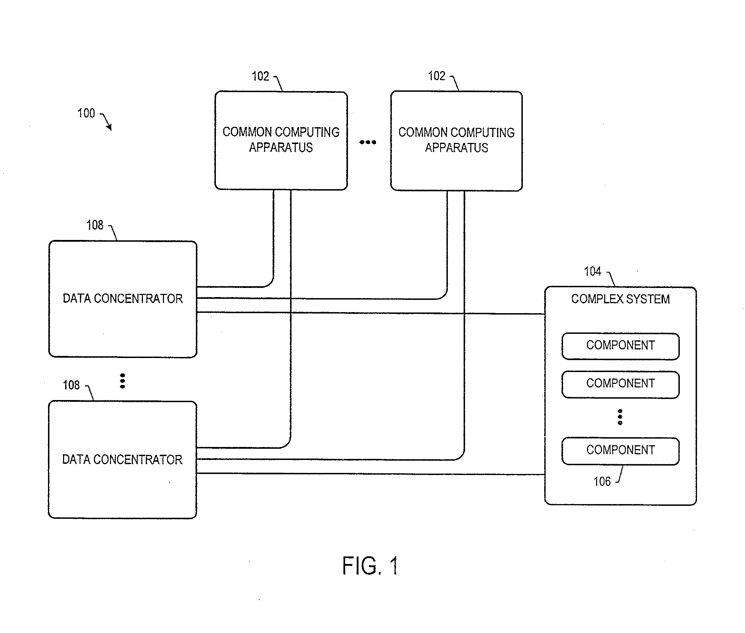

FIG. 1 illustrates a system **100** including one or more common computing apparatuses **102,** according to one example embodiment of the present invention. As explained in greater detail below, the common computing apparatus may provide both a non-certified computing platform configured to host non-certified software, and a certified computing platform configured to host certified software. In this regard, the common computing apparatus may be configured to host both non-certified and certified software such that both are capable of operating concurrently. In one example, the non-certified computing platform may be configured to host non-certified software exclusively (i.e., exclusive of certified software), and the certified computing platform may be configured to host certified software exclusively (i.e., exclusive of non-certified software).

The certified computing platform may be overseen by a certification authority responsible for certifying the certified software and/or hardware. In one example, the common computing apparatus may be configured to interface or otherwise communicate with a complex system **104** including a number of components **106** at least some of which are configured to receive data and/or transmit data. In this instance, one example of a certification authority may include a regulatory authority with authority over the complex system, the regulatory authority thereby having certification authority over the certified software and/or hardware.

The common computing apparatus **102** may be directly or indirectly coupled to the complex system **104** for the passage of data from the common computing apparatus to the complex system, and/or from the complex system to the common computing apparatus. In one example, the system **100** may include one or more data concentrators **108** configured to interface between the common computing apparatus **102** and complex system **104** for the passage of data from the common computing apparatus to the complex system, and/or from the complex system to the common computing apparatus. In another example, data may be passed from the complex system to the data concentrator, and/or from the data concentrator to the complex system, exclusive of the common computing apparatus. It should be understood, however, that the certification authority need not be or include the regulatory authority over a complex system, but may be instead another authority independent of any complex system with which the common computing apparatus may interface or otherwise communicate. In this regard, the system need not include a data concentrator configured to interface between the common computing apparatus and complex system. Or in another example, the common computing apparatus may itself be configured to implement the functions of both the common computing apparatus and data concentrator.

In one example described in greater detail below, the complex system **104** may be an aircraft including systems/avionics a number of which may be constructed as LRUs, and which aircraft may be regulated by the FAA. In one example, the aircraft may include a federated avionics platform in which the LRUs host respective functions implemented by respective target software. In a federated architecture, larger avionics systems may be created by assembly and integration of multiple LRUs. The assembly of these large distributed avionics systems may be costly from a financial point of view as well as space claim and weight penalties on the aircraft.

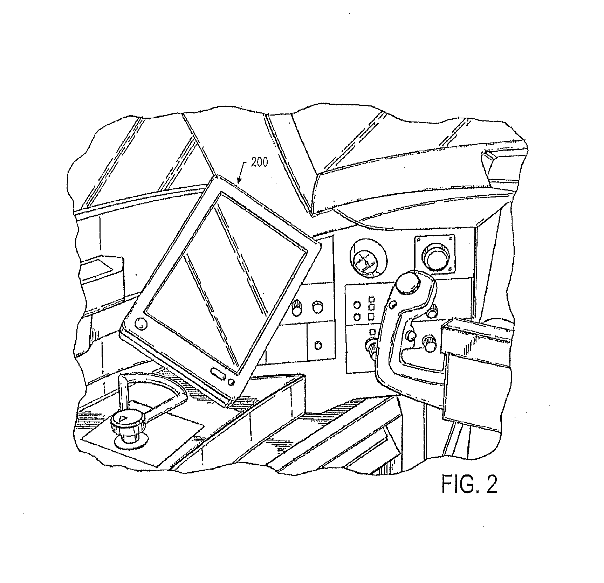

In one example, the common computing apparatus **102** may take the form of an EFB. As shown in FIG. 2, for example, an EFB **200** is commonly used to replace the paper charts, manuals and other references traditionally carried on board in pilots' flight bags. An EFB is generally a computer with a display for showing navigation charts, moving maps, weather patterns, technical data and other information.

As indicated above, the common computing apparatus **102** may be configured to host both non-certified and certified software such that respective software is capable of operating concurrently. In one example, the certification authority over the certified computing platform may be or include a regulatory authority such as the FAA. In one example, the non-certified computing platform may provide a COTS software environment including software such as airline/operator software not subject to traditional software certification processes (i.e., non-certified software), such as the Radio Technical Commission for Aeronautics (RTCA) DO-178B, entitled: *Software Considerations in Airborne Systems and Equipment Certification.*

In the context of an EFB, for example, such non-certified software may be deployed onto the EFB and may require operational approval from local aviation authorities prior to use. In one example, in accordance with DO-178B, non-certified software may include Type A and/or Type B software. Type A software may include software intended for use on the ground or during non-critical phases of flight, and Type B software may include software providing aeronautical information accessible at the pilot station for flight operations.

In one example, the certified computing platform may be configured as an IMA platform including software such as software that requires formal certification through appropriate regulatory channels (i.e., certified software), such as in accordance with the aforementioned DO-178B. In one example, in accordance with DO-178B, certified software may include Type C software. Type C software may include software approved by the FAA using DO-178B or another acceptable means. Additional details regarding Type A, B and C software may be found for example in FAA Advisory Circular (AC) 120-76A, entitled: *Guidelines for the Certification, Airworthiness, and Operational Use of Electronic Flight Bags (EFB),* and the European Aviation Safety Agency (EASA) TGL-36, entitled: *Approval of Electronic Flight Bags (EFBs).* And additional details regarding IMA may be found for example in RTCA DO-297, entitled: *Integrated Modular Avionics (IMA) Development Guidance and Certification Considerations,* and FAA AC 20-170, entitled: *Integrated Modular Avionics Development, Verification, Integration, and Approval using RTCA*/*DO-297 and Technical Standard Order C153.*

As explained in greater detail below, the certified (e.g., IMA) platform may be a single shared common computing platform providing a high-integrity partitioned environment configured to host multiple respective functions implemented by respective certified software, with the functions in one example being of various criticalities. The certified computing platform may therefore differ from a federated platform by employing shared processor, memory, I/O and/or communication resources. In one example, this shared resource approach may yield weight, power and/or cost savings to implement multiple functions on one common computing platform versus multiple dedicated LRUs. This approach may also provide the benefit of incremental certification or re-use of existing certifiable hardware or software components of the certified computing platform. The re-use approach may further lend itself to adding additional future capability that may not have been envisioned or planned in the original certification at a significantly reduced investment in terms of both time and cost versus rework of a federated system.

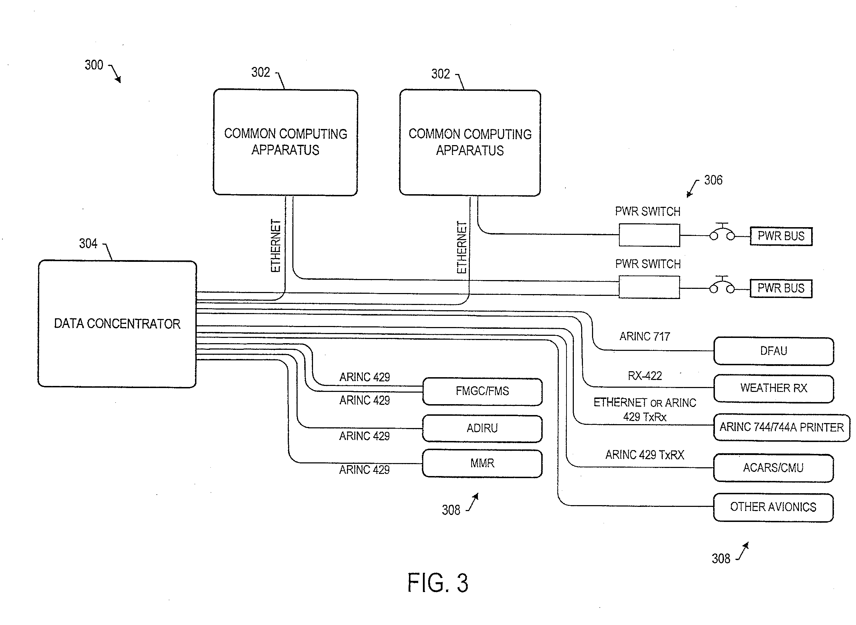

FIG. 3 illustrates an example system **300** that may be configured to operate as system **100** in the context of an aircraft, according to one example embodiment of the present invention. As shown, the system may include one or more common computing apparatuses **302,** which in one example may correspond to common computing apparatus **102;** and the system may include one or more data concentrators **304** (one being shown) that in one example may correspond to data concentrator **108**. As shown, in addition to the data concentrator, the common computing apparatus may be coupled to one or more power buses of the aircraft via a respective one or more power switches **306** from which the common computing apparatus may receive power. The data concentrator in one example may be coupled to the common computing apparatus and power switch, but may additionally be coupled to a number of systems/avionics **308** of the aircraft. Examples of suitable systems/avionics to which the data concentrator may be coupled include a flight management and guidance computer (FMGC) / flight management system (FMS), air data inertial reference unit (ADIRU) and/or multi-mode receiver (MMR). Other examples of suitable systems/avionics include a digital flight data acquisition unit (DFAU), weather receiver (Rx), ARINC 744/744A printer, aircraft communications addressing and reporting system (ACARS) / communications management unit (CMU), and/or traffic collisions avoidance system (TCAS).

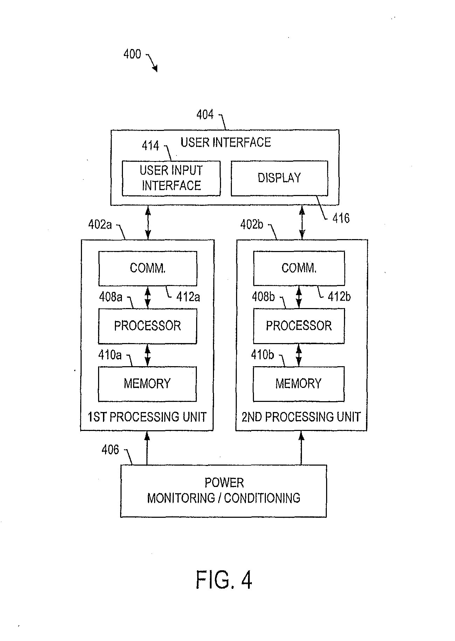

FIG. 4 illustrates one example of a suitable common computing apparatus **400,** which in various examples may correspond to common computing apparatus **102, 302.** The common computing apparatus generally includes a number of hardware components that may operate alone or in combination with software to carry out one or more functions attributed to the common computing apparatus according to example embodiments. As shown, for example, the common computing apparatus may include a first processing unit **402a** and a separate second processing unit **402b,** both of which may be coupled to a common user interface **404.** The common computing apparatus may include an internal power supply, or draw power from one or more external sources. In one example in which the computing device draws power externally, the common computing apparatus may also include a power interface **406** configured to interface with an external power source (e.g., power bus via power switch **306)** and provide power monitoring / conditioning functions.

As shown, the first processing unit **402a** may include one or more processors **408a** coupled to memory **410a** and one or more communication interfaces **412a.** Similarly, the second processing unit **402b** may include one or more processors **408b** coupled to one or more memory devices **410b** (sometimes referred to simply as "memory") and one or more communication interfaces **412b.**

Each processor **408a, 408b** may be embodied as or otherwise include any of a number of different means for performing processing functions such as those described herein. For example, the processor may be embodied as or otherwise include one or more microprocessors, coprocessors, controllers, special-purpose integrated circuits such as, for example, ASICs (application specific integrated circuits), FPGAs (field programmable gate arrays), DSPs (digital signal processors), hardware accelerators, processing circuitry or other similar hardware. Additionally or alternatively, for example, the processor may include one or more transistors, logic gates, a clock (e.g., oscillator) or other circuitry. Further for example, the processor may include one or more memory devices (e.g., non-volatile memory, volatile memory) configured to store instructions for execution by the processor for performing one or more of its functions.

Each memory device **410a, 410b** may be embodied as or otherwise include any of a number of different means for performing storage functions such as those described herein. The memory device may include fixed or removable volatile memory and/or non-volatile memory, and may store content, data or the like. For example, the memory may include one or more RAM (random access memory), ROM (read-only memory), HDD (hard disk drive), SSD (solid-state drive), NVRAM (non-volatile random access memory), optical disk or the like. The memory device may at times be referred to as a computer-readable storage medium, which is a non-transitory device capable of storing information, in contrast to a computer-readable transmission medium such as an electronic transitory signal capable of carrying information. As described herein, a computer-readable medium may generally refer to a computer-readable storage medium or computer-readable transmission medium.

As explained in greater detail herein, the memory device **410a, 410b** may store one or more software applications, instructions or the like executable by a respective processor **408a, 408b** to perform one or more functions described herein. This software may include, for example, non-certified and certified software of respective, distinct non-certified and certified computing platforms.

Each communication interface **412a, 412b** may be embodied as or otherwise include any of a number of different means for performing communication functions such as those described herein. For example, the communication interface may comprise a wired or wireless adapter, interface, transmitter, receiver, transceiver or the like for transmitting and/or receiving data, content or the like, such as to and/or from other apparatuses, devices and/or networks coupled to the common computing apparatus **400.** In one example, either or both of the communication interfaces may be directly or indirectly coupled to (by wire or wirelessly) the complex system **104,** or more particularly one or more of its components **106.** In one example, either or both of the communication interfaces may be coupled to the complex system via the data concentrator **108.**

The user interface **404** may be embodied as or otherwise include any of a number of different means for performing user-interaction functions such as those described herein. The user interface may include one or more wired or wireless user input interfaces **414** configured to receive user input into the processing units **402a, 402b,** one or more displays **416** configured to visually present an output of the processing units to the user, and/or one or more speakers, headphones or the like (not shown) configured to audibly present an output of the processing units to the user. The user input interface may include, for example, a keyboard, keypad, mouse, joystick, microphone, camera, touch-sensitive surface or the like. Examples of suitable displays include those employing technologies such as CRT (cathode ray tube), LCD (liquid crystal display), PDP (plasma display panel), LED (light-emitting diode display) or the like. In one example, the user input interface and display may be integrated such as in the context of a touchscreen display.

Although not separately shown, each processing unit **402a, 402b** may further include an I/O interface, which may be embodied as or otherwise include any of a number of different means for performing input/output (I/O) functions between a respective processor **408a, 408b** and one or more other components such as a respective memory device **410a, 410b,** respective communication interface **412a, 412b,** the user interface **404** or the like. The I/O interface may be configured to convert signals and data into a form interpretable by the processor, and may also perform I/O buffering operations.

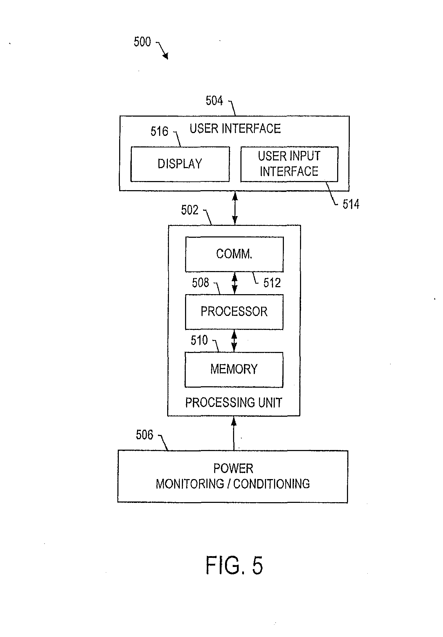

FIG. 5 illustrates one example of a suitable data concentrator **500,** which in various examples may correspond to data concentrator **108, 304.** The data concentrator generally includes a number of hardware components that may operate alone or in combination with software to carry out one or more functions attributed to the data concentrator according to example embodiments. In one example, similar to the common computing apparatus **400,** the data concentrator may include a processing unit **502** that may be coupled to a user interface **504.** The data concentrator may include an internal power supply, or draw power from an external source such as via a power interface **506** configured to interface with an external power source (e.g., power bus via power switch **306)** and provide power monitoring / conditioning functions.

As shown, the processing unit **502** may include one or more processors **508** coupled to memory **510** and one or more communication interfaces **512.** The processor, memory device and communication interface may each be embodied as or otherwise include any of a number of different means for performing respective ones of processing functions, storage functions and communication functions such as those described herein. Examples of a suitable processor, memory device and communication interface are provided above relative to respective ones of processors **408a, 408b,** memory devices **410a, 410b** and communication interface **412a, 412b** of one example of the common computing apparatus **400.** Notably, similar to the memory devices of the example common computing apparatus, the memory device of the example data concentrator **500** may store one or more software applications, instructions or the like executable by its processor to perform one or more functions described herein. In one example, this software may include certified software (e.g., Type C software), which the common computing apparatus **102** may otherwise be configured to host.

The user interface **504** may be embodied as or otherwise include any of a number of different means for performing user-interaction functions such as those described herein. Similar to the user interface **404** of the example common computing apparatus **400,** the user interface of the example data concentrator **500** may include one or more wired or wireless user input interfaces **514** configured to receive user input into the processing unit **502,** one or more displays **516** configured to visually present an output of the processing units to the user, and/or one or more speakers, headphones or the like (not shown) configured to audibly present an output of the processing units to the user. Examples of a suitable user input interface and display are given above relative to respective ones of FIG. 4. In one example, however, the data concentrator need not include a separate user interface, but may instead be configured to communicate with the common computing apparatus to achieve user-interaction functions via its user interface.

The processing unit **502** may further include an I/O interface (not shown), which may be embodied as or otherwise include any of a number of different means for performing input/output (I/O) functions between the processor **508** and one or more other components such as the memory device **510,** communication interface **512,** the user interface **504** or the like. The I/O interface may be configured to convert signals and data into a form interpretable by the processor, and may also perform I/O buffering operations.

As indicated above, the common computing apparatus **102** may provide both a non-certified computing platform configured to host non-certified software (e.g., Type A/B software), and a distinct certified computing platform configured to host certified software (e.g., Type C software), such that respective software may operate concurrently. In one example, the distinct non-certified and certified computing platforms may be provided by respective ones of the distinct first and second processing units **402a, 402b** of the common computing apparatus **400.** In this regard, the first processing unit may provide the non-certified (e.g., COTS) computing platform, and the distinct second processing unit provide the certified (e.g., IMA) computing platform. And in one example, the data concentrator **108** may provide a certified (e.g., IMA) computing platform similar to the common computing apparatus, which in one further example may be provided by the processing unit **502** of the data concentrator **500.**

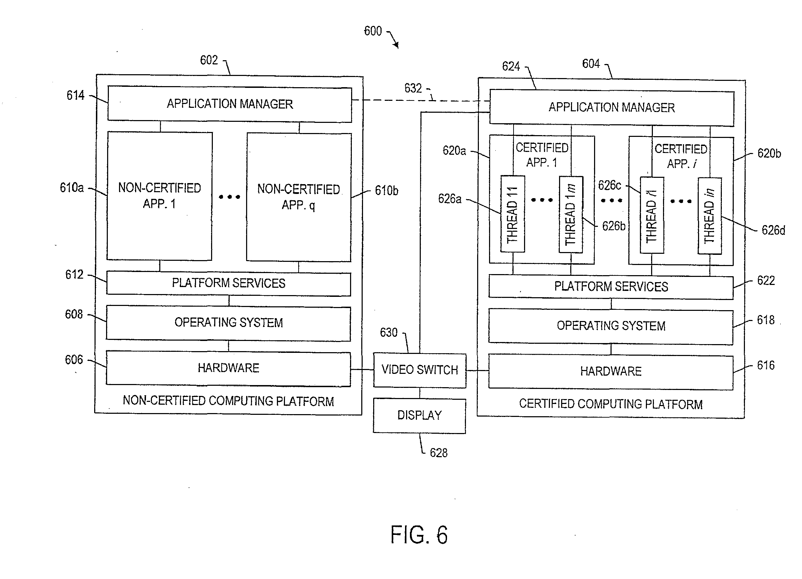

Reference is now made to FIG. 6, which illustrates a high-level system diagram of the common computing apparatus **600** of one example embodiment, which in one example may correspond to common computing apparatus **102** (e.g., common computing apparatus **402).** As shown in FIG. 6, the common computing apparatus may provide a non-certified computing platform **602** and a certified computing platform **604.** The non-certified computing platform may include hardware **606** (first hardware), which in turn may include or otherwise provide resources such as processing resources, memory resources, I/O resources and/or communication resources. In one example, the hardware may include the first processing unit **402a,** and the processing, memory, I/O and communication resources may correspond to respective ones of processor **408a,** memory **410a,** I/O resources (not shown) and communication interface **412a.**

Operating above the hardware **606,** the non-certified computing platform **602** may include an operating system **608** such as, for example, Microsoft Windows, Linux, Mac OS X or the like. The operating system may be configured to manage the hardware resources and provide services for non-certified software (e.g., Type A/B software) of the respective platform. FIG. 6 illustrates two example non-certified software applications **610a, 610b** (either or both of which may be generally referred to as non-certified software **610).**

Between the operating system **608** and non-certified software **610,** the non-certified computing platform **602** may include platform services **612,** system utilities or the like. Examples of suitable platform services include middleware libraries/services, simple network time protocol (SNTP) services, trivial file transfer protocol (TFTP) services, network services, I/O manager or the like. And an application manager **614** may coordinate, maintain and/or otherwise control the non-certified software, and may support their execution.

Similar to the non-certified computing platform **602,** the certified computing platform **604** may include hardware **616** (second hardware), which in turn may include or otherwise provide resources such as processing resources, memory resources, I/O resources and/or communication resources. In one example, the hardware may include the second processing unit **402b,** and the processing, memory, I/O and communication resources may correspond to respective ones of processor **408b,** memory **410b,** I/O resources (not shown) and communication interface **412b.**

Operating above the hardware **616,** the certified computing platform **604** may include an operating system **618** configured to manage the hardware resources and provide services for certified software (e.g., Type C software) of the respective platform. FIG. 6 illustrates two example certified software applications **620a, 620b** (either or both of which may be generally referred to as certified software **620).** In one example, the operating system of the certified computing platform may be a real-time operating system (RTOS), and similar to the certified software, it may be certified (e.g., DO-178B). Examples of a suitable certified operating system include INTEGRITY-178B, Deos, VxWorks, LynxOS or the like.

Also similar to the non-certified computing platform **602,** the certified computing platform **604** may include platform services **622** and an application manager **624,** either or both of which in various examples may be certified similar to the operating system and software. The application manager may coordinate, maintain and/or otherwise control the certified software **620,** and may support their execution.

In one example, the platform services **622** may provide a hardware abstraction layer configured to allow the certified software application interfaces to be abstracted from the hardware **616** and standardized. In this regard, the hardware abstraction layer may isolate the certified software from hardware changes, which may allow a reduction in maintenance and support costs due to obsolescent components. Industries such as the military and aerospace industry are continually challenged with obsolescence due to small market share and demand in the semiconductor space compared to consumer-based electronics. This small demand often leads to difficult and costly last time buys and new developments to replace older components. The hardware abstraction layer of example embodiments may reduce the impact an updated hardware platform may otherwise have on costly software development and verifications porting software to the updated hardware platform.

As indicated above, in one example, the certified software **620** in the certified computing platform **604** may be executed in partitions to thereby provide a partitioned environment, with each certified software application being executable in distinct, respective one or more partitions. This partitioned environment may include time and/or space partitioning, which may provide protection and functional separation between certified software applications. This in turn may enable the containment of a fault in a certified software application. The partitioned environment may also facilitate the validation, verification and/or certification of a certified software application.

In one example, the certified computing platform **604** may employ time partitioning whereby resources provided by the hardware **616** may be allocated in time to respective partitions (e.g., time-sliced allocation) - with the resources being accessible to a partition only during the time period or interval allocated to it. Additionally or alternatively, for example, the partitioned environment may employ space partitioning whereby blocks or zones of memory (e.g., memory **410b)** may be allocated to respective partitions - with the blocks/zones of memory being accessible to only the partition to which the respective blocks/zones are allocated. In one example, each partition may in turn include one or more threads (units of processing) to carry out operations of the respective certified software application. In FIG. 6, for example, the partition of certified software application **620a** includes *m* threads, of which two threads **626a, 626b** are shown; and the partition of certified software application **620b** includes *n* threads, of which two threads **626c, 626d** are shown - any one or more threads may be generally referred to as thread **626.**

As suggested above, in one example, the non-certified computing platform **602** and certified computing platform **604** may be coupled to a common user interface including a display **628,** which in one example may correspond to user interface **404** and display **416.** To coordinate the display between the two platforms, the common computing apparatus **600** may further include a video switch **630** coupled to and configured to receive appropriate signals from the hardware **606, 616** of the platforms, and selectively control the output of those signals to the display. The video switch may in turn be controlled by either or both of the platforms. In one example, the video switch may be controlled by the certified computing platform, and in a more particular example, may be controlled by its application manager **624.**

Additional coordination between the two platforms **602, 604** may be provided via an appropriate control interface **632** between their respective application managers **614, 624.** In one example, the platforms may be configured in a master/slave arrangement in which the certified computing platform may function as the master, and the non-certified computing platform may function as the slave. In this example, the application manager **614** of the non-certified computing platform may communicate via the corresponding application manager **624** of the certified computing platform to request control of the common computing apparatus' display resources. The application manager of the certified computing platform, then, may operate the video switch **630** to handover the display resource to non-certified software **610** of the non-certified computing platform.

In one example, the data concentrator **108** may provide a certified (e.g., IMA) computing platform similar to that of the common computing apparatus **102.** Although not separately shown, the certified computing platform of the data concentrator, like that of the common computing apparatus, may include hardware including or otherwise providing resources, and above the hardware, it may include an operating system configured to manage the hardware resources and provide services for software (e.g., Type C software) of the respective platform. In one example, the hardware may include the processing unit **502,** and its processing, memory, I/O and communication resources may correspond to respective ones of processor **508,** memory **510,** I/O resources (not shown) and communication interface **512.** The certified computing platform of the data concentrator may also include platform services and an application manager similar to those of the common computing apparatus. And in one example, the certified computing platform of the data concentrator may provide a partitioned environment, which may enable containment of fault data, and/or facilitate the validation, verification and/or certification of a certified software application hosted by the respective platform.

In various examples, the common computing apparatus **102** providing both non-certified and certified computing platforms according to example embodiments may realize a number of benefits, or otherwise include a number of features in addition to or in lieu of those described above. In the context of an IMA computing platform, certified function(s) or applications otherwise hosted by one or more LRUs may be instead hosted by the certified computing platform of the common computing apparatus. The common computing apparatus may therefore enable a reduction in the number of LRUs or devices required to implement multiple hosted function(s) on fewer LRUs. Reduction in the number of LRUs required to implement the hosted functions may in turn provide weight, power and/or cost savings.

An IMA computing platform and developments in operating system (e.g., RTOS) software certified in accordance with DO-178B may be very costly. By including a certified computing platform such as an IMA computing platform, the common computing apparatus **102** may allow for a reduction in development cost for follow-on maintenance and development due to re-use or incremental component based certifications. This IMA-based approach differs significantly from a federated-based approach where the complete operating system and platform software may require re-verification and substantiation for each separate LRU utilizing the software. The IMA-based approach lends itself very well to a non-certified environment such as an EFB environment, or a certifiable environment such as a pilot's work station, as the intended function of the system is intended to grow over time. As new hosted functions are envisioned and developed, they may be deployed to the aircraft environment providing operational efficiencies with a much shorter return on investment (ROI) contributing to the business case.

A certified computing platform such as an IMA computing platform may be reconfigurable, which may in turn allow the common computing apparatus **102** to host new applications or functions over time as needs or business opportunities arise. The flexibility to grow the intended function may provide value and/or weight/power savings. To accomplish this savings or re-use when deploying new applications, it may be beneficial to utilize an incremental approach to component certification as it may be difficult if not almost impossible to verify correct operation of certified computing platform such as an IMA computing platform in all possible configurations.

In one example, according to an incremental certification approach, the certified computing platform may be modified, and certification for the modified system may be achieved without repeating the verification or certification process on the modified system in its entirety. In accordance with this approach, certification of the computing platform may be achieved on a component level in which each component may be certified or approved on its own. This may allow new certified software or functionality to be created or added to the IMA computing platform by an assembly of previously certified or approved components in an operational scenario that may only require verification of the respective component's timing and memory budgets. In contrast, a federated environment may require each component to be re-verified on its own, and may further require platform-level integration testing. This reduced development and verification effort in an IMA computing platform may support the dynamic nature of a non-certified environment such as an EFB environment at a much lower cost, which may bring more capabilities to the market in a shorter time.

According to one aspect of the example embodiments of present invention, functions or operations performed by the common computing apparatus 102 and/or data concentrator **104** may be performed by various means. Means for implementing the functions or operations, combinations of the functions or operations, or other functionality of example embodiments of the present invention described herein may include hardware, alone or under direction of one or more computer program code instructions, program instructions or executable computer-readable program code instructions from a computer-readable storage medium (e.g., non-transitory memory **410a, 410b, 510,** etc.).

Program code instructions may be stored in memory and executed by a processor (e.g., processor **408a, 408b, 508).** As will be appreciated, any such program code instructions may be loaded onto a processor or other programmable apparatus to form a computer-readable storage medium to produce a particular machine, such that the particular machine becomes a means for implementing the functions or operations described herein. These program code instructions may also be stored in a computer-readable storage medium that can direct a processor or other programmable apparatus to function in a particular manner to thereby generate a particular machine or particular article of manufacture. The instructions stored in the computer-readable storage medium may produce an article of manufacture, where the article of manufacture becomes a means for implementing respective functions or operations. The program code instructions may be retrieved from a computer-readable storage medium and loaded into a processor or other programmable apparatus to configure the processor or other programmable apparatus to execute operations to be performed on or by the processor or other programmable apparatus. Retrieval, loading, and execution of the program code instructions may be performed sequentially such that one instruction is retrieved, loaded, and executed at a time. In some example embodiments, retrieval, loading and/or execution may be performed in parallel such that multiple instructions are retrieved, loaded, and/or executed together. Execution of the program code instructions may produce a computer-implemented process such that the instructions executed by the processor or other programmable apparatus provide operations for implementing the functions or operations described herein.

Accordingly, execution of instructions associated with functions or operations by a processor, or storage of instructions associated with the functions or operations in a computer-readable storage medium, supports combinations of operations for performing the specified functions. It will also be understood that one or more functions or operations described herein, and combinations of functions or operations described herein, may be implemented by special purpose hardware-based computer systems and/or processor s which perform the specified functions or operations, or combinations of special purpose hardware and program code instructions.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions other than those explicitly described above are also contemplated as may be set forth in some of the appended claims. Although specific terms are employed herein, they are used in a generic and descriptive sense only and not for purposes of limitation.

## Claims

1. An apparatus (600) comprising:
a non-certified computing platform (102; 302; 400; 602) including first hardware (606) and configured to host non-certified software;
a certified computing platform (102; 302; 400; 604) separate and distinct from the non-certified computing platform, the certified computing platform including second hardware (616) and configured to host certified software in a partitioned environment; and
a user interface (404) coupled to both the non-certified computing platform and certified computing platform, the user interface including a display (416; 628) coupled to both the first hardware and second hardware via a controllable switch (630);
wherein the non-certified computing platform and certified computing platform are configured to host the non-certified software and certified software such that both are capable of operating concurrently.

2. The apparatus of claim 1, wherein either or both of the first hardware or second hardware are couplable to a complex system regulated by a regulatory authority having certification authority over the certified software.

3. The apparatus of claim 2, wherein the complex system is an aircraft, and the regulatory authority is the Federal Aviation Administration.

4. The apparatus of claim 2 or 3, wherein either or both of the first hardware or second hardware are couplable to a data concentrator that is coupled to the complex system.

5. The apparatus of any preceding claim, wherein the apparatus is in the form of an electronic flight bag (EFB).

6. The apparatus of any preceding claim, wherein the certified computing platform is configured as an integrated modular avionics platform.

7. The apparatus of claim 6, wherein the non-certified computing platform provides a commercial-off-the-shelf software environment.

8. A system (100; 300) comprising:
a complex system (104) including a plurality of components (306, 308) at least some of which are configured to at least one of input data or output data; and
a common computing apparatus (600) coupled to the complex system for the passage of data at least one of from the common computing apparatus to the complex system, or from the common computing apparatus to the complex system, the common computing apparatus comprising the apparatus of any preceding claim.

9. The system of claim 8, wherein the complex system is regulated by a regulatory authority having certification authority over the certified software.

10. The system of claim 9, wherein the complex system is an aircraft, and the regulatory authority is the Federal Aviation Administration.

11. The system of claim 8, 9 or 10 further comprising:
a data concentrator (108, 304, 500) coupled to both the common computing apparatus and complex system, the data concentrator being configured to interface between the common computing apparatus and complex system.
